# FASCICULE DE BREVET EUROPEEN

(11) **EP 2 300 860 B1**
(45) Date de publication et mention de la délivrance du brevet: **05.09.2018**
(21) Numéro de dépôt: 09780418.1
(22) Date de dépôt: 10.07.2009
(51) Int. Cl.: G02B 5/23, G02C 7/10

(54) **STRUCTURE MULTICOUCHE A MATRICE HOTE PHOTOCHROMIQUE ET PROCEDE DE FABRICATION**
MEHRSCHICHTIGE STRUKTUR MIT FOTOCHROMER HOST-MATRIX UND HERSTELLUNGSVERFAHREN
MULTILAYER STRUCTURE HAVING A PHOTOCHROMIC HOST MATRIX AND MANUFACTURING METHOD

(30) Priorité: 11.07.2008 FR 0803981
(43) Date de publication de la demande: 30.03.2011
(73) Titulaire: THALES, 92400 Courbevoie (FR); Essilor International, 94220 Charenton-le-Pont (FR)
(72) Inventeur: ROSSINI, Umberto, F-38500 Coublevie (FR); SAUGEY, Anthony, F-94220 Charenton-le-Pont (FR)
(74) Mandataire: Esselin, Sophie
(86) Numéro de dépôt international: PCT/EP2009/058800
(87) Numéro de publication internationale: WO 2010/004021

(56) Documents cités:
- WO-A-96/34735
- WO-A-2005/019281
- WO-A-2008/033291
- WO-A1-00/21748
- WO-A1-2008/014529
- WO-A2-2008/020829
- US-A1- 2005 136 260

## Description

La présente invention concerne une structure multicouche à matériau photochromique et son procédé de fabrication.

Les matériaux photochromiques sont utilisés pour réaliser une fonction optique de filtre ou écran de lumière adaptatif, typiquement de filtre solaire (UV) adaptatif.

On appelle photochromisme la propriété d'un matériau à réagir à l'intensité d'un rayonnement déterminé, typiquement un rayonnement UV, par une modification de ses propriétés d'absorption de la lumière visible : le matériau s'obscurcit sous l'effet du rayonnement, et s'éclaircit en l'absence de ce rayonnement. Ce phénomène d'éclaircissement et d'assombrissement est réversible. On trouve ainsi des matériaux minéraux et organiques photochromiques dans l'industrie du verre. Selon l'état de l'art, des matériaux photochromiques minéraux ou organiques sont obtenus par incorporation dans un matériau, de substances photochromiques, par différentes techniques connues. Par exemple, des matériaux organiques photochromiques sont obtenus avant polymérisation, par mélange de molécules photochromes (par exemple molécules de Spiro-Oxazine) avec un monomère liquide, ou après polymérisation, par imprégnation en surface par traitement thermique (transfert thermique). Des matériaux minéraux photochromiques seront par exemple obtenus par introduction dans la matière de cristaux d'halogénure d'argent.

Les matériaux photochromiques connus ont différents inconvénients. Les procédés de fabrication utilisés les rendent coûteux. Notamment les verres optiques de lunettes intégrant une telle propriété optique sont coûteux. Pour ces raisons, il est difficilement envisageable de proposer des lunettes bon marché, du type jetable, intégrant une telle fonctionnalité, ce qui pourrait pourtant intéresser les utilisateurs de ce type de produit.

Ce coût empêche également leur utilisation dans des applications où les surfaces concernées sont relativement étendues, ce qui en limite les applications potentielles. Or la fonction de filtre optique intégrée de ces matériaux est potentiellement intéressante pour de nombreux produits ou articles tels que visières de casques, pour pilotes, pilotes d'aéronef par exemple, ou casques de protection en tout genre pour les métiers du bâtiment, des travaux publics, lunettes de sport (cyclisme)..., sans prétendre à l'exhaustivité.

Un autre inconvénient de ces matériaux est le temps de commutation assez lent entre les deux états assombri et éclairci : temps d'excitation, pour le passage de l'état de repos à l'état excité des molécules photochromique en présence d'un rayonnement déterminé, et temps de relaxation pour le passage de l'état excité à l'état de repos, en absence de rayonnement. Ces temps de commutation sont dépendants de la nature solide de la matrice hôte, verre minéral ou organique, qui accueille les molécules photochromiques. Notamment la lenteur de la relaxation peut s'avérer à l'usage très gênante. Enfin, s'agissant de matériaux optiques, se posent toujours le problème de leur remplacement ou de leur réparation, en cas de rayures notamment.

Dans l'invention, on s'est ainsi intéressé à une façon peu coûteuse de produire une structure multicouche à matériau photochromique, sous une forme qui en permette une utilisation variée et adaptable.

On connaît des structures composites, notamment des publications WO2008/014529, WO2005/019281, WO2008/033291, dans lesquelles un adhésif est chargé en photochromes à partir d'un solvant qui est ensuite évaporé ou séché.

Dans l'invention, on s'est aussi intéressé à obtenir une structure multicouche à matériau photochromique dans laquelle le matériau photochromique serait à temps de commutation rapides, notamment à relaxation rapide.

Dans l'invention, on s'est aussi intéressé à la fourniture d'une structure multicouche à matériau photochromique aisément remplaçable ou réparable.

Une solution à ces problèmes techniques a été trouvée dans l'invention, dans une structure multicouche photochromique définie par la revendication 1.

On obtient ainsi une structure à âme souple photochromique, homogène, favorisant des temps de commutation des photochromes rapides, notamment une relaxation rapide, du fait de sa nature fluide, non rigide.

L'invention concerne aussi un procédé de fabrication défini par la revendication 12 qui permet d'obtenir une telle structure, basé sur une étape de laminage à rouleau(x), permettant en une étape de process, l'imprégnation à saturation d'une couche d'adhésif formée en bande sur un support, et son collage sur un autre support, l'un au moins des supports étant un plastique transparent. Le procédé permet avantageusement de produire la structure photochromique sous différentes formes appropriées au mode d'utilisation demandé : sous une forme décollable, permettant la réparation des produits de destination, par remplacement, et repositionnable, sous forme de plaque ou en rouleaux, avec liner de protection pour une utilisation ultérieure. Par ce procédé tous les objectifs recherchés, d'amélioration des performances du matériau photochromique, de réduction des coûts de fabrication et de larges possibilités d'utilisation sont atteints.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 est une vue en coupe d'une structure photochromique selon l'invention prête à être reportée sur une autre surface;
- les figures 2a et 2b illustrent le principe d'obtention d'une structure photochromique selon l'invention (figure 2a) et un schéma simplifié d'un procédé de fabrication correspondant (figure 2b);
- les figures 3a et 3b sont un schéma simplifié du procédé de fabrication de la figure 2b (figure 3a) et une vue en coupe d'une structure photochromique obtenue par ce procédé (figure 3b);
- les figures 4a et 4b sont une vue en coupe d'une structure photochromique selon une deuxième variante de l'invention (figure 4a), et un schéma simplifié illustrant un exemple de procédé de fabrication correspondant (figure 4b);
- les figures 5a et 5b illustrent une autre variante d'une structure photochromique selon l'invention (figure 5a) et un procédé de fabrication correspondant (figure 5b);
- les figure 6a à 6d illustrent des exemples de dispositifs optiques ayant une surface optique, transparente, qui peut être formée de, ou revêtue par une structure photochromique selon l'invention ; et
- les figures 7a et 7b illustrent une structure photochromique selon l'invention fabriquée en plaque (figure 7a) ou en rouleau (figure 7b).

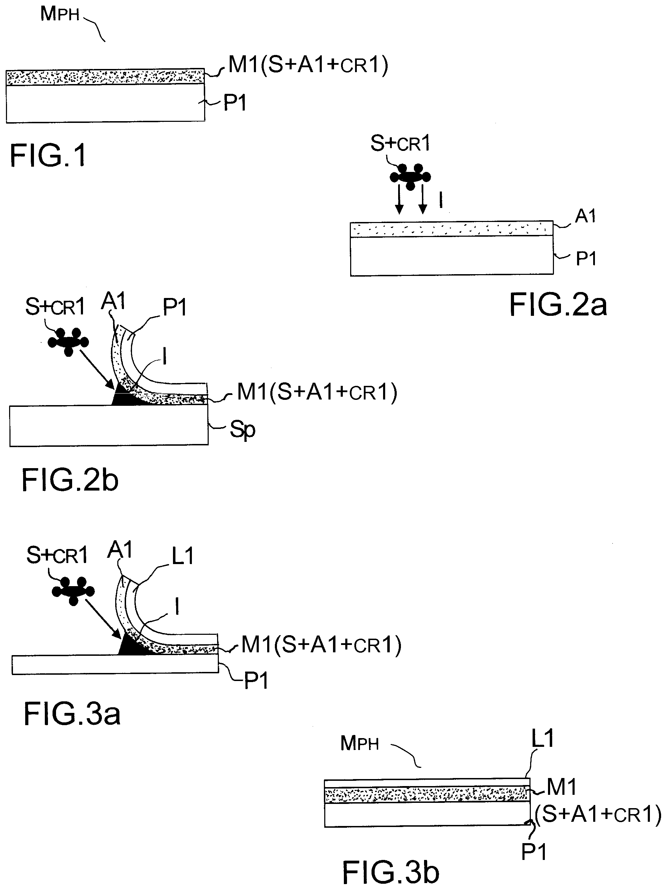

La figure 1 illustre une structure MPH à matrice hôte photochromique selon l'invention, prêt à être reportée sur une surface optique. Cette structure est formée d'un support plastique transparent P1 dont une face est revêtue d'une matrice hôte M1 formée d'une couche d'adhésif transparent A1 imprégnée d'une solution d'un solvant S et de photochromes CR1. La couche d'adhésif A1 assure à la fois la fonction de matrice hôte souple pour les photochromes CR1, et une fonction de report sur une autre surface non représentée, comme cela va être expliqué ci-après.

On entend par fonction de report sur une surface, une fonction d'adhésion par collage de cette couche sur la surface.

On verra dans la suite que la surface de report peut être une surface optique externe, tel que par exemple une visière de casque, ou la surface d'une autre couche de la structure.

Comme illustré sur la figure 2a, cette structure photochromique est obtenue par imprégnation I d'une couche adhésive A1 déposée sur une face du support plastique P1, d'une solution d'un solvant S et de photochromes CR1. Les photochromes CR1 sont répartis de façon homogène dans la couche adhésive A1 imprégnée de la solution solvatée, qui devient la couche ou matrice M1 : A1+S+CR1. Ils sont intégrés dans cette couche A1 dans le solvant S, ce qui leur confère une grande mobilité qui permet une relaxation rapide.

Le volume de solution solvatée de photochromes dans la couche adhésif est fonction de la nature du solvant et de l'adhésif, mais aussi du niveau de coloration recherché. Cette coloration dépend en effet de la concentration en photochromes dans la matrice hôte. Pour un niveau de coloration donné, la quantité minimale de solvant dans l'adhésif est déterminée à partir de la limite de solvabilité de la quantité de photochromes nécessaire à assurer ce niveau de coloration.

On cherche à obtenir une imprégnation à saturation de la couche d'adhésif de la quantité de solution solvatée de photochromes ainsi déterminée, dans des limites permettant de conserver une fonction adhésive suffisante. L'épaisseur de couche d'adhésif est ainsi de préférence déterminée pour obtenir cette imprégnation à saturation, c'est-à-dire une épaisseur juste suffisante à absorber la quantité de solution déterminée pour avoir la concentration souhaitée, et suffisante pour conserver une fonction adhésive suffisante. Ce mode de détermination de l'épaisseur de couche permet de garantir le niveau de coloration voulue tout en conservant une structure pas trop épaisse. On a pu déterminer qu'un ratio de l'ordre de 60% de solution solvant + polychromes pour 40% d'adhésif permet l'imprégnation à saturation dans les limites des propriétés adhésives recherchées. A 20% d'adhésif, la fonction d'adhésion n'est plus correctement assurée.

Un ratio de l'ordre de 60/40 est ainsi de préférence utilisé, pour déterminer, pour une concentration donnée, l'épaisseur la plus fine possible d'adhésif à utiliser pour cette concentration.

La figure 2b illustre schématiquement un procédé conforme à l'invention, par lequel cette structure est obtenue. Suivant ce procédé, on dépose sur un support Sp, une goutte de la solution solvatée de photochromes (solvant S plus photochromes CR1), et on vient dérouler, par une lamineuse à rouleau(x) (non illustrée), une bande 1 formée du support plastique transparent P1 et de la couche adhésive A1, face adhésive contre le support Sp. La couche adhésive s'imprègne (I) au fur et à mesure au contact de la goutte de solution. Le volume de la goutte est calculé pour permettre l'imprégnation de toute la bande, de préférence une imprégnation à saturation comme défini plus haut (ratio autour de 60/40). Dans cette opération, et comme illustré sur la figure, la couche adhésive imprégnée M1 se retrouve prise entre les deux supports Sp et P1, en sorte qu'il n'y a pas évaporation du solvant. Plus généralement, dans le procédé de l'invention, il n'y a pas d'opération de séchage ou d'évaporation du solvant. La présence du solvant dans la matrice hôte participe des qualités de vitesse de réaction et de répartition homogène des photochromes.

Par ailleurs, selon le procédé de l'invention, l'adhésif A1 de la matrice hôte n'est pas réticulé (en d'autre termes, le procédé de fabrication ne comprend aucune étape de réticulation de l'adhésif A1), en sorte que sa fluidité est conservée dans le matériau MPH, dans les plages de température d'utilisation des produits de destination.

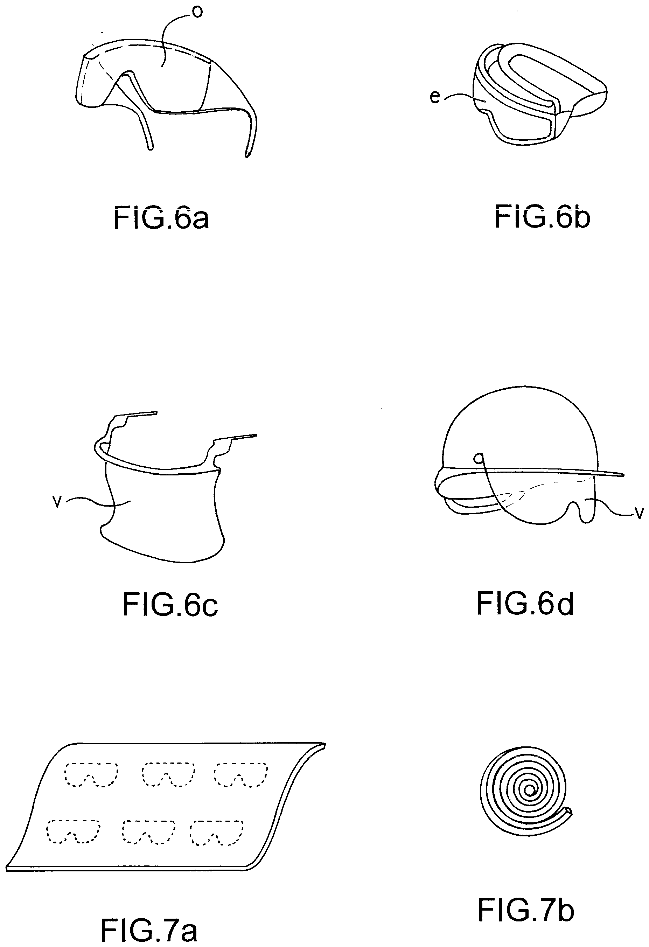

Le matériau MPH multicouche à matrice photochromique constitué par l'ensemble P1 plus adhésif imprégné M1, peut ensuite être décollé du support de fabrication Sp, pour être reporté sur le support optique de destination, par exemple l'un des produits illustrés aux figures 6a à 6d (lunettes, visières...), face adhésive M1 contre ce support. Dans cet exemple, l'adhésif A1 de la couche imprégnée M1 assure une fonction de matrice hôte des photochromes CR1, dissous dans leur solvant S, et une fonction de report sur une autre surface. Dans cette opération, la couche imprégnée M1 se retrouve entre les deux supports, le support de destination, par exemple une visière de casque (Fig.6d), et le support P1 initial qui forme la face la plus externe du produit. La matrice hôte M1 conserve ainsi toutes ses propriétés de souplesse conférées par le fait que l'adhésif A1 soit non réticulé et que le solvant S soit non séché ou évaporé, propriétés grâce auxquelles les photochromes contenus dans la couche matrice M1 imprégnée restent très mobiles et répartis de façon homogène.

Suivant un aspect de l'invention, le décollement de l'ensemble structurel M1+P1, pour un report par collage sur une surface de destination, peut être envisagé suivant deux variantes de fabrication.

Dans une variante, la face du support Sp sur laquelle est déroulée la bande A1+P1 est avantageusement du type antiadhésif (non illustré), ce qui permet après l'étape d'imprégnation I, de décoller l'ensemble P1+M1 : on obtient le matériau MPH de la figure 1, prêt à être reporté sur une surface optique d'un produit de destination. L'adhésif A1 est par exemple un adhésif connu sous l'appellation dit PSA "*Pressure sensitive Adhesive*", *généralement qualifié d'acrylique.* Plus particulièrement, on peut citer à titre d'exemples et de façon non limitative, les PSA de compositions générales à base de polyacrylates, polyméthacrylates, à base de copolymères éthylèniques tels que les éthylène vinyl acétates, éthylène éthyle acrylates, et éthylène éthyle méthacrylates, les PSA à base de caoutchouc synthétique et élastomères incluant les silicones, les polyuréthanes, les styrènes butadiènes, les polybutadiènes, les polyisoprènes, les polypropylènes, les polyisobutylènes, les PSA à base de polymères comprenant des nitriles ou acrylonitriles, les PSA à base de polychloroprène, les PSA à base de copolymères à blocs comprenant polystyrène, polyéthylène, polypropylène, polyisoprène, polybutadiène, les PSA à base de copolymères polyvinylpyrrolidone et vinylpyrrolidone ainsi que les compositions ou mélanges (de phases continues ou discontinues) des précédents, ainsi que des copolymères à blocs obtenus à partir des précédents.

Dans une autre variante, l'adhésif A1 est du type décollable et ou repositionnable, c'est-à-dire un adhésif qui présente un niveau d'adhérence correspondant à une force de pelage de préférence inférieure à environ 40 Newtons par mètre. Un exemple correspondant est l'adhésif utilisé en papeterie pour réaliser les index collables repositionnables.

Dans une variante d'un procédé de fabrication selon l'invention, illustrée sur les figures 3a et 3b, on peut produire une structure multicouche à matrice hôte photochromique MPH sous une forme qui permette un stockage dans l'attente d'une utilisation ultérieure. La structure est produite avec un film ou pellicule plastique de protection de type antiadhésive L1, généralement dénommé "liner", sur la couche adhésive M1. Cette protection permet un report ultérieur de la structure sur une surface optique (verre, polycarbonate...), par enlèvement du liner L1. Ce liner permet à la matrice hôte M1 (=A1+S+CR1) de conserver toutes les propriétés de fluidité qui découlent du procédé de fabrication (pas d'évaporation du solvant, pas de réticulation de l'adhésif). Le liner n'est enlevé qu'au moment où l'on veut reporter la structure photochromique sur la surface optique.

De manière plus détaillée, et comme illustré, la structure photochromique MPH comprend alors l'empilement du support plastique (de qualité optique) P1, la matrice hôte M1 comprenant l'adhésif A1, le solvant S et les photochromes CR1, et le liner L1. Cette structure peut être stockée et/ou vendue sous cette forme, pour une utilisation ultérieure, dans un dispositif optique quelconque, tel que des lunettes, une visière ...

Cette structure photochromique avec liner est produite par un procédé d'imprégnation similaire à celui vu en figure 2b, avec les adaptations suivantes : le support Sp devient le support plastique transparent P1 de la structure à former, et la bande 1 formée d'un support et sa couche adhésive A1 à imprégner, comprend la couche adhésive A1, et un liner L1 sur la partie "externe" (figure 3b).

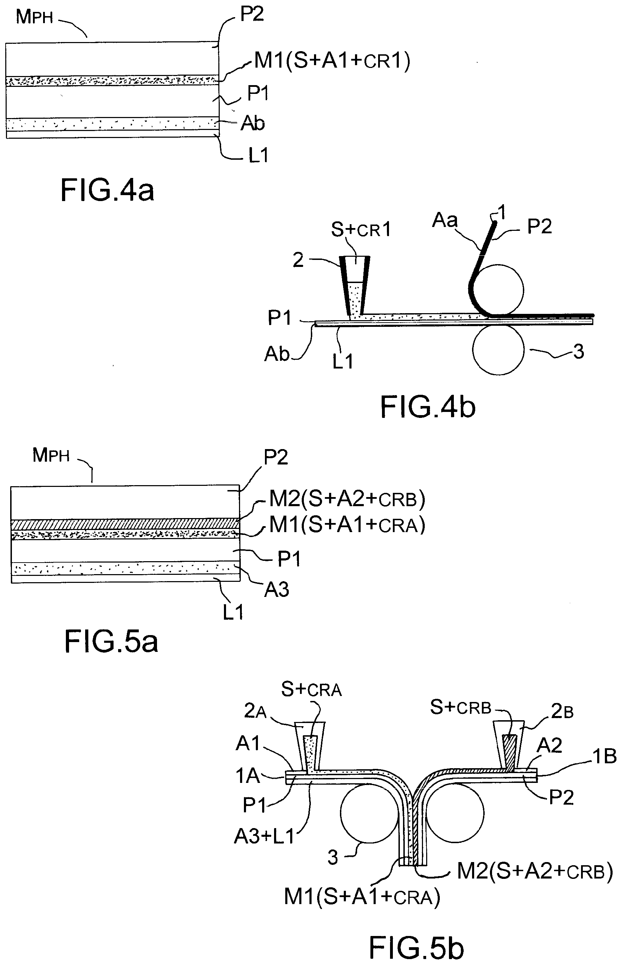

La figure 4a illustre une autre variante de structure photochromique suivant l'invention, dans laquelle la matrice souple M1 est intégrée entre deux couches plastiques transparentes P1 et P2, formant ainsi une structure MPH à âme souple photochromique M1 = Aa+S+CR1. Le procédé de fabrication suivant l'invention, pour fabriquer une telle structure, est illustré sur la figure 4b. Il utilise une lamineuse à rouleaux assurant en une étape de process l'imprégnation de l'adhésif Aa sur le support P2, et l'adhésion sur l'autre support P1. Ce procédé est détaillé plus loin.

On peut fabriquer selon ce principe des structures comportant des couches supplémentaires. On peut notamment munir cette structure MPH d'une autre couche adhésive transparente, qui assure une fonction de report de la structure MPH (P1/M1/P2) sur une surface transparente optique, comme illustré en exemple sur les figures 4a et 4b : le support plastique P1 comporte dans cet exemple un adhésif transparent Ab avec un liner de protection L1 sur la face opposée à celle sur laquelle la matrice hôte M1 (A1+S+CR1) est reportée. Dans ce cas, le procédé comprend la préparation de deux bandes : une bande avec le support P2 et la couche d'adhésif Aa qui doit être imprégnée, et une bande formée du support P1, de l'adhésif Ab et du liner L1. La structure obtenue est ainsi prête pour être collée sur toute surface transparente optique, par enlèvement du liner de protection L1 et report. Si l'adhésif Ab est de type décollable, ou repositionnable, la structure pourra être décollée pour être changée, ou repositionnée.

En pratique, l'intensité de coloration, ou teinte, de la structure photochromique exposée à un rayonnement est une fonction de l'épaisseur de la matrice hôte M1 et de la concentration de photochromes en solution dans le solvant.

La matrice hôte étant obtenue par imprégnation de l'adhésif, avec la solution solvatée de photochromes, la densité de photochromes dans le volume de la matrice hôte est égale à la densité de photochromes dans le volume de solvant absorbé. Plus la densité est élevée, plus l'intensité de coloration pourra être grande. Aussi, la concentration de photochromes dans le solvant sera de préférence la plus élevée possible, définie par la solvatation maximum du colorant dans le solvant, pour un volume de solvant donné. Le volume de solvant est déterminé pour obtenir une imprégnation du solvant à saturation dans la couche adhésive, comme défini précédemment. De préférence la matrice hôte M1 imprégnée à saturation comprend 60% de solvant plus photochromes pour 40% d'adhésif.

Dans un exemple pratique, pour une couche adhésive en PSA, le système de dispense sera prévu pour délivrer de l'ordre de 10 millilitres par m² de solution solvatée de photochromes.

On notera que le support plastique P1 ou P2 n'absorbe pas la solution solvatée. Tout est absorbé par la couche adhésive.

La densité de photochromes obtenue dépend de l'épaisseur de la couche d'adhésif. On prévoit typiquement une épaisseur de 25 microns. Pour augmenter l'intensité de coloration de la structure, si on utilise une densité de photochromes maximum en solution dans le solvant, on peut augmenter l'épaisseur de la couche adhésive, par exemple, prévoir une couche de 50 microns au lieu de 20 ou 25 microns. On augmente ainsi la quantité de photochromes dans le matériau photochromique MPH.

Dans un perfectionnement, pour améliorer l'intensité de la coloration et/ou corriger la colorimétrie de la couche photochromique, on prévoit dans l'invention de superposer deux couches photochromiques, en sorte de former un "bi-couche" photochromique.

Une telle structure à bi-couche photochromique selon l'invention est obtenue par la réalisation d'au moins deux matrices hôtes souples, chacune avec des photochromes différents, superposées l'une sur l'autre dans la même structure.

Dans cet exemple, la structure MPH comprend un premier support plastique P1 avec une première couche adhésive hôte M1 de photochromes d'un premier type CR1, et un deuxième support plastique avec une deuxième couche adhésive hôte M2 de photochromes d'un deuxième type CR2. Dans l'exemple, les supports P1 et P2 sont assemblés par leurs faces adhésives M1 et M2 : les deux matrices hôtes M1 et M2 sont superposées l'une sur l'autre, enserrées entre les deux supports P1 et P2 formant ainsi un matériau MPH à âme souple bi-photochromique.

Dans l'exemple, la structure présente avantageusement une couche adhésive A3 supplémentaire pour un report sur une surface, avec liner L1 de protection, sur la face la plus externe d'une des couches plastiques, P1 dans l'exemple. Cette couche adhésive A3 sera avantageusement du type décollable/repositionnable.

De préférence les photochromes CRA, CRB présentent des complémentarités dans leur spectre d'absorption pour obtenir une teinte choisie. Par exemple, les photochromes de premier type CRA, auront un spectre dans le visible qui correspond au bleu, et les photochromes de second type CRB, auront un spectre dans le visible qui correspond au jaune, la superposition des deux donnant ainsi au matériau une couleur sensiblement neutre.

Une telle structure bi-âme est avantageusement réalisée en une même étape d'un procédé selon l'invention, au moyen d'une lamineuse à rouleaux comme illustré sur la figure 5b. Ce procédé est détaillé plus loin.

En variante, elle peut aussi être réalisée en préparant séparément deux supports avec leur couche d'adhésif chargée en solvant et photochromes comme décrit en relation avec les figures 2a, 2b, 2c, puis reportés l'un sur l'autre par leur face adhésive, après enlèvement du liner de protection le cas échéant (figure 2c). Dans ces variantes, les matrices hôtes pourront ne pas être directement superposées l'une sur l'autre.

En pratique, les supports plastiques transparents doivent avoir les propriétés suivantes : avoir une bonne transparence (plastiques de qualité optique), et pouvoir servir de support à la couche adhésive. Ils sont avantageusement thermoformables, c'est à dire avec une température de transition qui permet ensuite une déformation à chaud de la structure obtenue, dans le but de lui donner une conformation adaptée à la forme du produit de destination. Dans ce cas on utilisera comme adhésif de matrice hôte, un adhésif inerte aux températures de thermoformage.

Les supports plastiques transparents utilisés doivent aussi être peu coûteux. On peut choisir ainsi tout plastique de qualité optique, c'est-à-dire un plastique qui associe une bonne transparence et aucune déformation d'image lors d'une observation par transmission. Ce plastique aura des propriétés mécaniques appropriées, notamment : thermoformable et imperméable à la vapeur d'eau, et avec une bonne stabilité thermique. Parmi les plastiques ayant les qualités optiques et mécaniques recherchées pour l'application, on peut citer en exemple des polyesters, tel que du polyéthylène téréphtalate ou PET, du polycarbonate ou bien encore du polyéthylène naphtalate (PEN) ; ou du tri acétate de cellulose TAC ; ou bien encore des polymères oléfiniques tels que le C.O.C (copolymère cyclo oléfinique). La liste des plastiques pouvant être utilisés pour réaliser une structure photochromique selon l'invention n'est pas limitative.

S'agissant des couches adhésives, elles doivent chacune avoir une bonne transparence. Dans une structure selon l'invention, on peut en rencontrer de deux types :
- les couches adhésives A1 et ou A2 qui ont à la fois une fonction de report sur une surface, qui peut être soit directement la surface d'un dispositif optique de destination (figures 1, 2a) ou d'abord la surface d'un autre support (figure 2b) ou d'un liner (figure 3b), avant un report sur un dispositif optique de destination ; soit la surface d'une autre couche de la structure photochromique (figures 4a ou 5a) ; et une fonction de matrice hôte des photochromes;
- les couches adhésives telles que les couches Ab (figure 4a) ou A3 (figure 5a), qui ont seulement une fonction de report sur une surface d'un dispositif optique de destination et qui seront généralement protégées par un liner L1.

Les couches adhésives présentes sur une face externe de la structure photochromique formée selon l'invention, qui ont une fonction de report sur une surface d'un dispositif optique de destination, pourront avantageusement être du type décollable et/ou repositionnable, tel que l'adhésif utilisé par exemple en papeterie pour les index collables repositionnables. Ceci permet de repositionner le matériau, et le remplacement du matériau en cas d'endommagement : rayures par exemple. Le matériau photochromique est "jetable" et remplaçable : le dispositif optique est ainsi réparable.

Un tel adhésif décollable pourra aussi être employé dans le cas où la structure photochromique est fabriquée sur un support Sp dont elle est ensuite décollée, comme dans le cas illustré sur la figure 2b.

Le solvant utilisé sera par exemple de l'éthyle 4 metoxy phényle acétate, dit solvant EMPA.

Les photochromes seront choisis en pratique pour leur capacité à se dissoudre dans le solvant, et en fonction de leur spectre dans le visible (colorimétrie résiduelle) et du domaine d'absorption recherché. Par exemple, on pourra utiliser des composés photochromiques contenant un motif central tel qu'un noyau spirooxazine, spiro-indoline[2,3']benzoxazine, chromène, spiroxazine, spyropyranes, homoazaadamantane, spirofluorène-(2*H*)-benzopyrane, naphto[2,1-*b*]pyrane, ou naphto[1,2-*b*]pyrane.

L'invention qui vient d'être décrite permet de réaliser un filtre de lumière variable sous forme d'une structure multicouche découpable, de préférence thermoformable, qui peut être reportable sur une surface optique, et avantageusement repositionnable ou jetable.

Cette structure est produite par le procédé de l'invention décrit en relation avec la figure 4b. Ce procédé utilise un système de laminage à rouleaux 3 combiné à un système de dispense 2A de la solution solvatée de photochromes en amont des rouleaux 3, par lequel la couche d'adhésif sur un support en bande est entrainée par les rouleaux, imprégnée puis laminée sur un autre support, formant en sortie une structure comprenant une matrice hôte entre deux supports, l'un au moins des supports étant un plastique transparent.

La figure 5b illustre un procédé de fabrication préféré pour la fabrication d'une structure bi-couche photochromique, telle que par exemple la structure de la figure 5a. Il utilise deux systèmes de dispense 2A et 2B en amont du système de laminage à rouleaux 3, et deux bandes 1A et 1B, comprenant chacune un support plastique, revêtu d'une couche adhésive transparente. La bande 1A (respectivement 1B) comprend ainsi le support P1 (respectivement P2), revêtu de la couche adhésive transparente A1 (respectivement A2). Les deux bandes sont chacune entrainées par les rouleaux 3, tel que les couches d'adhésif de chaque bande sont chacune imprégnées de la solution solvatée de photochromes respective, en amont des rouleaux, par le système de dispense correspondant, puis laminées l'une sur l'autre, formant en sortie une structure bi-âme photochromique : deux matrices hôtes l'une sur l'autre, entre deux supports, l'un au moins étant un plastique transparent.

Dans les deux exemples de fabrication décrits des figures 4b et 5b, et comme décrits amplement en relation avec les figures montrant les différentes structures de l'invention, un ou les deux supports sont transparents, et les supports peuvent être de différentes natures ou structure, mono ou multicouche, permettant avec le même procédé de fabrication, de fabriquer des structures différentes, adaptées aux différentes utilisations ou destinations de la structure photochromique.

Notamment la structure et la nature des supports peut varier. Toutes les variantes décrites précédemment sont applicables. Par exemple, les deux supports peuvent être monocouche : deux supports plastiques transparents comme décrit en relation avec la figure 4a, ou un support plastique transparent et un liner comme illustré sur la figure 3b, ou encore un support plastique transparent, et un support plastique duquel la structure est ensuite décollée, comme décrit en relation avec les figures 1 et 2b.

L'un au moins des supports peut être multicouche : par exemple un support plastique transparent, et un support formé d'un support plastique transparent, d'une couche adhésive et d'un liner comme illustré sur les figures 4a et 5a.

Le procédé de fabrication suivant l'invention, utilisant des techniques de laminage à rouleaux et des matériaux plastiques du commerce fournis par exemple en rouleaux, ou en plaque, typiquement des rouleaux ou des plaques de plastique PET ou TAC, permet de produire une structure photochromique avec ou sans adhésif PSA, qui est efficace et rapide, de façon peu coûteuse, et avantageusement, sous cette même forme, c'est-à-dire en plaques ou rouleaux comme illustré de façon schématique sur les figures 7a et 7b.

Le matériau en plaque ou rouleau comprendra de préférence sur une face externe une couche adhésive de report telle que Ab (figure 4a) ou A3 (figure 5a), revêtue d'une feuille de protection type liner (L1).

Selon le produit de destination, le matériau à matrice souple photochromique selon l'invention est découpé, thermoformé, pour obtenir la forme voulue.

Le matériau photochromique MPH selon l'invention peut être utilisé de différentes façons, notamment selon son épaisseur (qui est principalement donnée par l'épaisseur du ou des supports plastique P1, P2) :
- S'il est assez épais, ce qui lui confère une certaine rigidité, la structure photochromique MPH peut être utilisée pour réaliser la partie optique o de lunettes (figure 3a), typiquement des lunettes jetables, des écrans e de masques (figure 6b) ou des visières v solaires de casques (figures 6c et 6d) par exemple. Compte-tenu du faible coût de revient d'une structure photochromique selon l'invention, au moins ces parties o, e, ou v du produit, sont jetables, car bon marché.
- en faible épaisseur, par exemple inférieure à environ 75µ, il peut être utilisé comme revêtement de pelliculage, reportable, voire repositionnable, par exemple sur ces écrans ou visières, ou sur des verres optiques de lunettes. Notamment, s'agissant de visières de protection aux projections ou autres, généralement réalisées en polycarbonate, le matériau sera proposé sous forme de revêtement pelliculable, à coller sur le polycarbonate.

Dans ce cas, le produit est réparable : la pellicule abîmée (rayé) peut être décollée et une nouvelle pellicule recollée.

Ces quelques exemples d'application d'une structure multicouche à matrice hôte photochromique produite selon l'invention ne sont pas limitatifs. Tout produit potentiellement intéressé à intégrer une fonction d'écran à un rayonnement déterminé adaptatif peut utiliser une structure photochromique selon de l'invention produite sous une forme adaptée (pellicule, ou matériau plus rigide, reportable ou non, repositionnable ou non, mono ou bi couche photochromique ...).

## Revendications

1. Structure multicouche (MPH) photochromique comprenant au moins une matrice hôte photochromique (M1), **caractérisée en ce que** ladite matrice hôte (M1) est une matrice hôte souple comprenant un adhésif transparent non réticulé (A1) imprégné à saturation d'un solvant (S) et de photochromes (CR1), formée entre deux supports dont au moins l'un est un support plastique optiquement transparent.

2. Structure photochromique selon la revendication 1, **caractérisée en ce que** les deux supports sont en plastique optiquement transparent, formant ainsi une structure à âme souple photochromique.

3. Structure photochromique selon la revendication 2, **caractérisée en ce qu'**elle comprend en outre sur une face externe d'un des supports, une couche d'un adhésif optiquement transparent (Ab, A3) du type décollable et/ou repositionnable.

4. Structure photochromique selon la revendication 3, **caractérisée en ce qu'**elle comprend en outre sur une face externe d'un des supports, une couche d'un adhésif optiquement transparent (Ab, A3) recouverte d'une feuille de protection antiadhésive (L1).

5. Structure photochromique selon la revendication 1, dans laquelle ledit adhésif (A1) de la matrice hôte est du type décollable et/ou repositionnable.

6. Structure photochromique selon la revendication 1 ou 5, dans laquelle l'autre support est un liner de protection.

7. Structure photochromique selon l'une quelconque des revendications précédentes, présentée en plaque.

8. Structure photochromique selon la revendication 6, présentée en rouleau.

9. Structure photochromique l'une quelconque des revendications 1 à 8, dans laquelle l'imprégnation à saturation de la couche d'adhésif est dans un rapport proche de 60% de solvant et photochromes pour 40% d'adhésif.

10. Structure photochromique selon l'une quelconque des revendications 1 à 9, dans laquelle les deux supports (P1, P2) sont en plastique optiquement transparent, et qui comprend entre les deux supports, deux matrices hôte souples (M1, M2), chacune comprenant un adhésif optiquement transparent non réticulé (A1, A2), un solvant et des photochromes (CR1, CR2), formant ainsi une structure à âme souple biphotochromique.

11. Structure photochromique selon la revendication 10, **caractérisé en ce que** les photochromes d'une matrice hôte et les photochromes de l'autre matrice hôte sont complémentaires dans leur spectre d'absorption pour obtenir une teinte choisie.

12. Procédé de fabrication d'une structure multicouche photochromique comportant au moins une matrice hôte photochromique, **caractérisé en ce qu'**il utilise un système de laminage à rouleaux (3) combiné à un système de dispense (2A) de la solution de solvant (S) et de photochromes (CR1) en amont des rouleaux 3, et une bande (1) d'un support (P1) dont une face est revêtue d'une couche d'un adhésif non réticulé (A1) pour imprégner à saturation ladite couche d'adhésif, ledit procédé comprenant une étape dans laquelle ladite bande (1) est entraînée par les rouleaux (3) du système de laminage, pour imprégner au fur et à mesure ladite couche d'adhésif avec ladite solution de solvant et photochromes par ledit système de dispense, avant d'être laminée sur un autre support (Sp), formant en sortie une structure à âme souple photochromique, entre deux supports, dont l'un au moins est un plastique optiquement transparent.

13. Procédé de fabrication selon la revendication 12, utilisant deux systèmes de dispense en amont du système de laminage à rouleaux 3, et deux bandes (1A, 1B), comprenant chacune un support dont une face est revêtue d'une couche d'un adhésif non réticulé (A1, A2), les deux bandes étant entraînées par les rouleaux (3) du système de laminage, et la couche d'adhésif de chaque bande étant imprégnée d'une solution respective d'un solvant et de photochromes (S+CRA, S+CRB) par un système de dispense respectif (2A, 2B), puis laminées l'une sur l'autre, formant en sortie une structure bi-âme photochromique : deux matrices hôtes l'une sur l'autre, entre deux supports, l'un au moins est un plastique optiquement transparent.

14. Procédé selon la revendication 12 ou 13, dans lequel au moins l'un des supports est multicouche, comprenant une couche support plastique optiquement transparent, une couche d'un adhésif décollable/repositionnable et un liner.

15. Procédé selon la revendication 12 ou 13, dans laquelle la quantité de solution solvatée de photochromes (S+CR1) à dispenser est déterminée en fonction de l'épaisseur de couche d'adhésif à imprégner, pour obtenir une imprégnation à saturation de la couche d'adhésif, dans un rapport proche de 60% de solvant et photochromes pour 40% d'adhésif.

16. Dispositif optique de protection à un rayonnement, **caractérisé en ce qu'**il comprend une structure photochromique selon l'une quelconque des revendications 1 à 11.

## Patentansprüche

1. Photochrome mehrschichtige Struktur (M_{PH}), welche wenigstens eine photochrome Wirtsmatrix (M1) umfasst, **dadurch gekennzeichnet, dass** die Wirtsmatrix (M1) eine flexible Wirtsmatrix ist, die einen nicht vernetzten durchsichtigen Klebstoff (A1), der bis zur Sättigung mit einem Lösungsmittel (S) und mit photochromen Teilchen (CR1) getränkt ist, umfasst und zwischen zwei Trägern ausgebildet ist, von denen wenigstens einer ein optisch transparenter Kunststoffträger ist.

2. Photochrome Struktur nach Anspruch 1, **dadurch gekennzeichnet, dass** die zwei Träger aus optisch transparentem Kunststoff bestehen und so eine Struktur mit einem photochromen flexiblen Kern bilden.

3. Photochrome Struktur nach Anspruch 2, **dadurch gekennzeichnet, dass** sie außerdem auf einer äußeren Seite eines der Träger eine Schicht eines optisch transparenten Klebstoffs (Ab, A3) vom lösbaren und/oder repositionierbaren Typ umfasst.

4. Photochrome Struktur nach Anspruch 3, **dadurch gekennzeichnet, dass** sie außerdem auf einer äußeren Seite eines der Träger eine Schicht eines optisch transparenten Klebstoffs (Ab, A3) umfasst, die mit einer antiadhäsiven Schutzfolie (L1) bedeckt ist.

5. Photochrome Struktur nach Anspruch 1, wobei der Klebstoff (A1) der Wirtsmatrix vom lösbaren und/oder repositionierbaren Typ ist.

6. Photochrome Struktur nach Anspruch 1 oder 5, wobei der andere Träger ein Schutzliner ist.

7. Photochrome Struktur nach einem der vorhergehenden Ansprüche, welche als Platte präsentiert wird.

8. Photochrome Struktur nach Anspruch 6, welche als Rolle präsentiert wird.

9. Photochrome Struktur nach einem der Ansprüche 1 bis 8, wobei die Tränkung der Klebstoffschicht bis zur Sättigung in einem Verhältnis erfolgt, das nahe bei 60 % Lösungsmittel und photochrome Teilchen zu 40 % Klebstoff liegt.

10. Photochrome Struktur nach einem der Ansprüche 1 bis 9, wobei die zwei Träger (P1, P2) aus optisch transparentem Kunststoff bestehen, und welche zwischen den zwei Trägern zwei flexible Wirtsmatrizen (M1, M2) umfasst, die jeweils einen nicht vernetzten, optisch transparenten Klebstoff (A1, A2), ein Lösungsmittel und photochrome Teilchen (CR1, CR2) umfassen und so eine Struktur mit einem biphotochromen flexiblen Kern bilden.

11. Photochrome Struktur nach Anspruch 10, **dadurch gekennzeichnet, dass** die photochromen Teilchen einer Wirtsmatrix und die photochromen Teilchen der anderen Wirtsmatrix in ihrem Absorptionsspektrum komplementär sind, um einen gewählten Farbton zu erhalten.

12. Verfahren zur Herstellung einer photochromen mehrschichtigen Struktur, welche wenigstens eine photochrome Wirtsmatrix aufweist, **dadurch gekennzeichnet, dass** es ein Walzsystem mit Walzen (3), das mit einem den Walzen (3) vorgelagerten System zur Abgabe (2A) der Lösung von Lösungsmittel (S) und von photochromen Teilchen (CR1) kombiniert ist, und eine Bahn (1) eines Trägers (P1), dessen eine Seite mit einer Schicht eines nicht vernetzten Klebstoffs (A1) bedeckt ist, verwendet, um die Klebstoffschicht bis zur Sättigung zu tränken, wobei das Verfahren einen Schritt umfasst, in welchem die Bahn (1) von den Walzen (3) des Walzsystems angetrieben wird, um die Klebstoffschicht durch das Abgabesystem nach und nach mit der Lösung von Lösungsmittel und photochromen Teilchen zu tränken, bevor sie auf einen anderen Träger (Sp) gewalzt wird, wobei am Ausgang eine Struktur mit einem photochromen flexiblen Kern zwischen zwei Trägern ausgebildet wird, von denen wenigstens einer ein optisch transparenter Kunststoff ist.

13. Verfahren zur Herstellung nach Anspruch 12, welches zwei dem Walzsystem mit Walzen (3) vorgelagerte Abgabesysteme und zwei Bahnen (1A, 1B), die jeweils einen Träger umfassen, dessen eine Seite mit einer Schicht eines nicht vernetzten Klebstoffs (A1, A2) bedeckt ist, verwendet, wobei die zwei Bahnen von den Walzen (3) des Walzsystems angetrieben werden, wobei die Klebstoffschicht jedes Bandes durch ein jeweiliges Abgabesystem (2A, 2B) mit einer jeweiligen Lösung eines Lösungsmittels und von photochromen Teilchen (S+CRA, S+CRB) getränkt wird, und anschließend übereinander gewalzt werden, wobei am Ausgang eine photochrome Struktur mit zwei Kernen ausgebildet wird: zwei Wirtsmatrizen übereinander, zwischen zwei Trägern, wobei wenigstens einer ein optisch transparenter Kunststoff ist.

14. Verfahren nach Anspruch 12 oder 13, wobei wenigstens einer der Träger mehrschichtig ist, wobei er eine optisch transparente Kunststoffträgerschicht, eine Schicht eines lösbaren/repositionierbaren Klebstoffs und einen Liner umfasst.

15. Verfahren nach Anspruch 12 oder 13, wobei die Menge an abzugebender solvatisierter Lösung von photochromen Teilchen (S+CR1) in Abhängigkeit von der Dicke der zu tränkenden Klebstoffschicht bestimmt wird, um eine Tränkung der Klebstoffschicht bis zur Sättigung zu erzielen, in einem Verhältnis, das nahe bei 60 % Lösungsmittel und photochrome Teilchen zu 40 % Klebstoff liegt.

16. Optische Vorrichtung zum Schutz bei einer Strahlung, **dadurch gekennzeichnet, dass** sie eine photochrome Struktur nach einem der Ansprüche 1 bis 11 umfasst.

## Claims

1. Photochromic multilayer structure (MPH) comprising at least one photochromic host matrix (M1), **characterized in that** the said host matrix (M1) is a flexible host matrix comprising a non-crosslinked transparent adhesive (A1) impregnated to saturation with a solvent (S) and photochromes (CR1), formed between two supports, at least one of which is an optically transparent plastic support.

2. Photochromic structure according to Claim 1, **characterized in that** the two supports are made of optically transparent plastic, thus forming a structure with a flexible photochromic core.

3. Photochromic structure according to Claim 2, **characterized in that** it also comprises, on an outer face of one of the supports, a layer of an optically transparent adhesive (Ab, A3) of the peelable and/or repositionable type.

4. Photochromic structure according to Claim 3, **characterized in that** it also comprises, on an outer face of one of the supports, a layer of an optically transparent adhesive (Ab, A3) covered with an anti-adhesive protective sheet (L1).

5. Photochromic structure according to Claim 1, in which the said adhesive (A1) of the host matrix is of the peelable and/or repositionable type.

6. Photochromic structure according to Claim 1 or 5, in which the other support is a protective liner.

7. Photochromic structure according to any one of the preceding claims, which is in plate form.

8. Photochromic structure according to Claim 6, which is in roll form.

9. Photochromic structure according to any one of Claims 1 to 8, in which the impregnation to saturation of the adhesive layer is in a ratio close to 60% of solvent and photochromes per 40% of adhesive.

10. Photochromic structure according to any one of Claims 1 to 9, in which the two supports (P1, P2) are made of optically transparent plastic, and which comprises, between the two supports, two flexible host matrices (M1, M2), each comprising a non-crosslinked optically transparent adhesive (A1, A2), a solvent and photochromes (CR1, CR2), thus forming a structure with a flexible two-photochromeic core.

11. Photochromic structure according to Claim 10, **characterized in that** the photochromes of one host matrix and the photochromes of the other host matrix are complementary in their absorption spectrum to obtain a chosen hue.

12. Process for manufacturing a photochromic multilayer structure comprising at least one photochromic host matrix, **characterized in that** it uses a roll-milling system (3) combined with a system (2A) for dispensing the solution of solvent (S) and of photochromes (CR1) upstream of the rolls 3, and a strip (1) of a support (P1), one face of which is coated with a layer of a non-crosslinked adhesive (A1) in order to impregnate to saturation the said adhesive layer, the said process comprising a step in which the said strip (1) is entrained by the rolls (3) of the roll-milling system, to gradually impregnate the said adhesive layer with the said solution of solvent and photochromes by the said dispensing system, before being laminated on another support (Sp), forming at the outlet a structure with a flexible photochromic core, between two supports, at least one of which is an optically transparent plastic.

13. Manufacturing process according to Claim 12, using two dispensing systems upstream of the roll-milling system 3, and two strips (1A, 1B), each comprising a support, one face of which is coated with a layer of a non-crosslinked adhesive (A1, A2), the two strips being entrained by the rolls (3) of the roll-milling system, and the adhesive layer of each strip being impregnated with a respective solution of a solvent and of photochromes (S+CRA, S+CRB) by a respective dispensing system (2A, 2B), and then laminated one on the other, forming at the outlet a two-core photochromic structure: two host matrices one on the other, between two supports, at least one of which is an optically transparent plastic.

14. Process according to Claim 12 or 13, in which at least one of the supports is multilayer, comprising an optically transparent plastic support layer, a layer of a peelable/repositionable adhesive and a liner.

15. Process according to claim 12 or 13, in which the amount of solvated solution of photochromes (S+CR1) to be dispensed is determined as a function of the thickness of the adhesive layer to be impregnated, to obtain impregnation to saturation of the adhesive layer, in a ratio close to 60% of solvent and photochromes per 40% of adhesive.

16. Optical device for protecting against a radiation, **characterized in that** it comprises a photochromic structure according to any one of Claims 1 to 11.
